# EUROPEAN PATENT APPLICATION

(11) **EP 4 039 091 A1**
(43) Date of publication of application: **10.08.2022**
(21) Application number: 21155229.4
(22) Date of filing: 04.02.2021
(51) Int. Cl.: A01M 21/04, E01H 11/00

(54) **A WEED CONTROL APPARATUS, POLE, SYSTEM AND METHOD**

(71) Applicant: Bayer AG, 51373 Leverkusen (DE)
(72) Inventor: The designation of the inventor has not yet been filed
(74) Representative: Vossius & Partner Patentanwälte Rechtsanwälte mbB

(57) **Abstract**

The present invention relates to a weed control apparatus (10). The weed control apparatus (10) comprises at least one electrode (20); at least one power supply unit (30); and at least one electrical connection unit (40). The electrode (20) is configured to contact a weed. The power supply unit (30) is configured to supply the electrode (20) with electrical energy. The electrical connection unit (40) is electronically connected to the power supply unit (30). The electrical connection unit (40) is configured to be connectable, preferably via at least one cable (45) comprising a plug (46), to a socket (60) of a weed control pole (50). The weed control pole (50) is permanently mounted in the soil in proximity to the weed to be contacted with the electrode (20) of the weed control apparatus (10). The weed control pole (50) comprises an electrode (70).

## Description

### FIELD OF THE INVENTION

The present invention relates to a weed control apparatus, to a weed control pole and to a weed control system comprising a weed control apparatus and a weed control pole as well as to a weed control method.

### BACKGROUND OF THE INVENTION

The general background of this invention is weed control. Municipalities have limited financial resources for removing weeds in urban areas. At the same time, increasing standards of environmental legislation lead to a reduction of agrochemicals used for non-agricultural applications. Therefore, there is a need for alternative weed control solutions such as electrical weed control methods and tools. A known electro weeding technology is using electrical high voltage (tension with at least 1.000V) to introduce electrical current into the foliage of a weed with an electrode of an appropriate device in order to kill the weed. A second electrode which may also contact a weed in proximity of the first weed is used to close the electrical circuit through the leaves, roots of the weeds and the soil. However, it is known that such technologies are not always efficient in controlling weeds because e.g. the energy transfer from the electrodes to the plants is insufficient and/or the use of the technology is complex.

### SUMMARY OF THE INVENTION

It would be advantageous to have improved weed control technology based on an electrode based weed control technology.

The object of the present invention is solved with the subject matter of the independent claims, wherein further embodiments are incorporated in the dependent claims. It should be noted that the following described aspects and examples of the invention apply also for the weed control pole, the weed control system, and for the weed control method.

According to a first aspect, there is provided a weed control apparatus. The weed control apparatus comprises:
- at least one electrode;
- at least one power supply unit;
- at least one electrical connection unit.
The at least one electrode is configured to contact a weed. The at least one power supply unit is configured to supply the at least one electrode with electrical energy. The at least one electrical connection unit is electronically connected to the at least one power supply unit. The at least one electrical connection unit is configured to be connectable, preferably via at least one cable comprising a plug, to a socket of a weed control pole. The weed control pole is permanently mounted in the soil in proximity to the weed to be contacted with the at least one electrode of the weed control apparatus. The weed control pole comprises an electrode.

In this way, the weed control apparatus can be easily connected to a fixed earth return pole e.g. in a street. The pole is used to close the electrical circuit when the weed is contacted with an electrode (e.g. a lance). The electrical current runs through the applicator (electrode) of the weed control apparatus to the leaves and roots of the contacted weed, the soil and back to the weeding control apparatus via the return pole. This enables weed control of cities in areas which are more sensitive such as the city center, which do not present very easy access to the soil because of the surfaces in such areas are normally covered with e.g. concrete, cobblestones, and/or macadam. By installing such fixed earth return poles e.g. in a street, any weed control treatment will be faster because no time will be lost for setting up the pole at the beginning and while the weed control treatment is moving on. The weeding with electricity by killing the root of the weed will enable the municipality to have a clean city for a longer period of time and reduces the number of weeding operations. The weeding with electricity is also less damaging for a street surface in comparison to other mechanical methods such as e.g. brushing weeds (which can damage the cobblestones) and is overall less harmful to the environment.

In an example, the weed control apparatus comprises a second connection unit. The at least one power supply unit is electrically connected to the second connection unit. The second connection is configured to be electrically connectable, preferably with a second cable comprising a plug, to a second socket of the weed control pole. The weed control pole comprises a high voltage source configured to provide electrical energy via the second connection unit to the at least one power supply unit.

Thus, the weed control technology can have - as part of the earth return pole - a supply of electricity that can replace the generator of the power supply unit of the weed control apparatus. In this case, the power supply unit of the weed control apparatus requires only a transformer unit as the source of electricity will be available directly from the permanently installed weed control pole e.g. in the street.

In an example, the at least one electrode of the weed control apparatus is configured to contact a weed within an area of between 1 to 50 meters from the weed control pole and all around the weed control pole.

In this manner, it is ensured that with the same tension all weed can be treated and killed as required for an efficient weed control operation.

In an example, the weed control apparatus comprises a distance sensor, a processing unit, and an output unit. The distance sensor is configured to provide the processing unit with the distance between the at least one electrode and the weed control pole. The processing unit is configured to determine the voltage required to control a weed to be contacted with the at least one electrode wherein the determination of the voltage comprises utilization of the measured distance between the at least one electrode and the weed control pole. The output unit is configured to output information useable to apply the required voltage to the at least one electrode. In other words, the voltage applied to control the weed can be changed depending on the distance between the electrode which contacts the weed and the weed control pole. This increases the effectiveness and reduces risks as only the required amount of voltage is applied to control a plurality of weeds.

According to a second aspect, there is provided a weed control pole. The weed control pole comprises:
- at least one electrode;
- at least one socket.
The weed control pole is configured to be permanently mounted in the soil in proximity to a plurality of weeds. The at least one electrode is configured to be in direct contact with the soil after permanent mounting of the weed control pole in the soil. The at least one socket is electronically connected to the at least one electrode. The at least one socket is electronically connectable to at least one weed control apparatus. The weed control apparatus comprises a at least one electrode, at least one power supply unit, and least one electrical connection unit. The at least one socket is configured to be electrically connectable via the at least one electrical connection unit to the at least one power supply unit. The at least one power supply unit is configured to supply the at least one electrode with electrical energy. The at least one electrode is configured to contact a weed in proximity to the weed control pole.

Thus, the weed control pole (also referred to as "earth return pole" herein) is intended to be permanently fixed e.g. on streets. This overcomes the difficulty of setting up a return pole in a street during the weeding operation which takes time and is difficult in particular in urban areas where the ground is covered almost everywhere with concrete, cobblestones, and/or macadam.

In an example, the weed control pole further comprises:
- a box with a lid.
The box is configured to enclose the at least one socket of the weed control pole. The lid is configured to close the box and to protect the at least one socket. The lid is configured to be displaceable from the box to make the at least one socket accessible for an electronic connection via the electronic connection unit to the at least one power supply unit of the weed control apparatus.

In this manner, the socket of the weed control pole is protected during non-use of the weed control technology from environmental impacts such as rain etc. but remains easily accessible by displacing the lid from the box when weed control operations are required.

In an example, the at least one electrode of the weed control pole is located underneath the at least one socket.

In an example, the box of the weed control pole comprises a hinged lid.

In an example, the weed control pole further comprises:
- a second socket;
- a high voltage source.
The weed control apparatus further comprises a second electrical connection unit. The second socket is configured to be electrically connectable via the second electrical connection unit to the at least one power supply unit of the weed control apparatus. The high voltage source is configured to provide electrical energy via the second electrical connection unit to the at least one power supply unit of the weed control apparatus.

In other words, the weed control pole has a dual function. First, it provides the second electrode to close the electrical circuit when electrical current is applied to the weed with the electrode of the weed control apparatus. Second, it provides the source for the electricity. As a consequence, the weed control apparatus does not need a generator to make electricity but can be simpler constructed and requires lower maintenance.

According to a third aspect, there is provided a weed control system. The weed control system comprises at least one weed control apparatus according to the first aspect, and at least one weed control pole according to the second aspect. The at least one electrical connection unit of the at least one weed control apparatus is configured to be connectable to the at least one socket of the at least one weed control pole.

In an example, the weed control system comprises a plurality of weed control poles. The plurality of weed control poles are arranged along a street, preferably with a distance to each other of at least 10 meters.

In other words, a plurality of weed control poles on an area to be treated with a weed control technology ensures that the weeds on the complete area are efficiently treated with the weed control technology.

In an example, plurality of weed control poles are placed alternately on each side of the street in a staggered arrangement; preferably with a distance to each other of at least 10 meters.

According to a fourth aspect, there is provided a weed control method with at least one weed control apparatus and at least one weed control pole. The weed control method comprises:
a) providing at least one weed control apparatus with at least one electrode , at least one power supply unit, and at least one electrical connection unit; wherein the at least one power supply unit is configured to supply the at least one electrode with electrical energy; and wherein, the at least one electrical connection unit is electronically connected to the at least one power supply unit;
b) providing at least one weed control pole with at least one electrode, and at least one socket;
   wherein, the at least one electrode is configured to be in direct contact with the soil; and
   wherein, the at least one socket is electronically connected to the at least one electrode;
c) connecting the at least one electrical connection unit of the weed control apparatus to the socket of the at least one weed control pole, preferably with at least one cable;
e) contacting a weed in proximity to the at least one weed control pole with the at least one electrode of the weed control apparatus to apply high voltage to the weed.

Thus, a fast and efficient weed control method is provided which is based on electro weeding.

In an example, the weed control method comprises - prior to step a):
a0) permanently mounting the at least one weed control pole in the soil in proximity to the weed to be contacted with the at least one electrode of the at least one weed control apparatus.

In an example, the weed control method comprises - in step a0):
a0) permanently mounting a plurality of weed control poles along a street.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of weed control apparatus, a weed control pole and a weed control system;
Fig. 2 shows a schematic set up of another example of a weed control apparatus, a weed control pole and a weed control system;
Fig. 3 shows a schematic set up of another example of a weed control apparatus, a weed control pole and a weed control system;
Fig. 4 shows illustratively the working zone of a weed control apparatus around a weed control pole;
Fig. 5 shows a schematic set up of an example of a weed control pole with a box;
Fig. 6 shows a schematic set up of an example of a weed control pole with a box and a hinged lid;
Fig. 7 shows a schematic set up of an example of a weed control pole with a high voltage source;
Fig. 8 shows a schematic set up of an example of a plurality of weed control poles along a street (from a top view perspective).

### DETAILED DESCRIPTION OF EMBODIMENTS

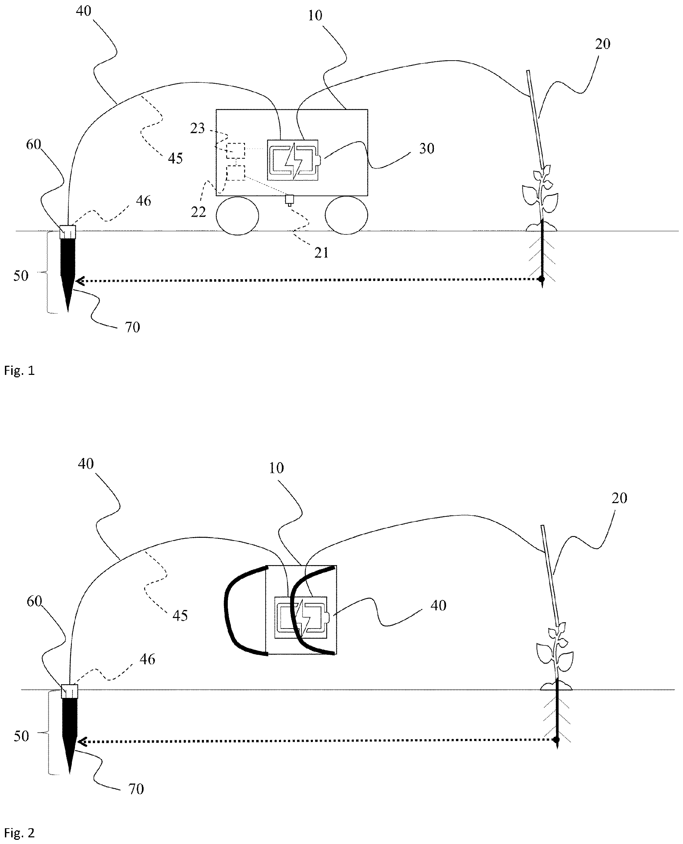

Fig. 1 shows an example of a weed control apparatus 10. The weed control apparatus 10 comprises at least one electrode 20, at least one power supply unit 30, and at least one electrical connection unit 40. The at least one electrode 20 is configured to contact a weed. The at least one power supply unit 30 is configured to supply the at least one electrode 20 with electrical energy. The at least one electrical connection unit 40 is electronically connected to the at least one power supply unit 30. The at least one electrical connection unit 40 is configured to be connectable, preferably via at least one cable 45 comprising a plug 46, to a socket 60 of a weed control pole 50. The weed control pole 50 is permanently mounted in the soil in proximity to the weed to be contacted with the at least one electrode 20 of the weed control apparatus 10. The weed control pole 50 comprises an electrode 70.

In an example, the weed control apparatus can be a vehicle with wheels (see Fig. 1) such as a small van, a robot, an Unmanned Ground Vehicle (UGV), or a backpack device (see example of Fig. 2).

In an example, the at least one electrode 20 is a part of an applicator lance.

In an example, the applicator lance further comprises an electricity control switch configured to enable an operator to turn on/off the electricity. This allows an operator to turn on the electricity only when a weed is contacted with the electrode 20. In an example, the at least one power supply unit 30 comprises a generator configured to generate electrical high voltage (a tension with at least 1.000V).

In an example, the at least one cable 45 comprising a plug 46 is permanently connected to the weed control apparatus 10.

In an example, the at least one cable 45 comprising a plug 46 can be connected (e.g. with another plug-socket system) to the at least one electrical connection unit 40 of the weed control apparatus 10.

In an example, the term "in proximity" refers to the distance of between the permanently mounted weed control pole 50 and the weed to be contacted with the at least one electrode 20 of the weed control apparatus 10. This distance is a range of between 1 to 50 meters from the weed control pole, preferably a range of between 5 to 30 meters from the weed control pole, more preferably a range of between 10 to 20 meters from the weed control pole.

In an example, at a given applied voltage a minimum distance is required as otherwise the applied electricity would immoderately heat the soil.

In an example, a maximum distance is necessary because of effectiveness issues. Longer distances lead to more dispersion of energy in the soil and less energy targeted to the root of the weed. Therefore, for longer distances a higher voltage should be applied and/or the time to maintain the electricity should be longer.

Fig. 1 also shows with the dotted lines below the weed control apparatus 10 that the electrical circuit is closed as the electricity flows from the weed (the roots) in the direction of the dotted arrow to the weed control pole 50 (when the weed control apparatus 10 is connected to the weed control pole 50 and when the electrode 20 contacts the weed).

According to an example, the weed control apparatus 10 comprises an distance sensor 21, a processing unit 22, and an output unit 23 (see also Fig. 1). The distance sensor 21 is configured to provide the processing unit 22 with the distance between the at least one electrode 20 and the weed control pole 50; wherein, the processing unit 22 is configured to determine the voltage required to control a weed to be contacted with the at least one electrode 20 wherein the determination of the voltage comprises utilization of the measured distance between the at least one electrode 20 and the weed control pole 50; wherein the output unit 23 is configured to output information useable to apply the required voltage to the at least one electrode 20. Thus, the voltage is adapted depending on the distance between the at least one electrode and the weed control pole. In an example, the distance sensor 21 may refer to a sonar, laser, or other non-contact sensor techology generally known to a person skilled in the art.

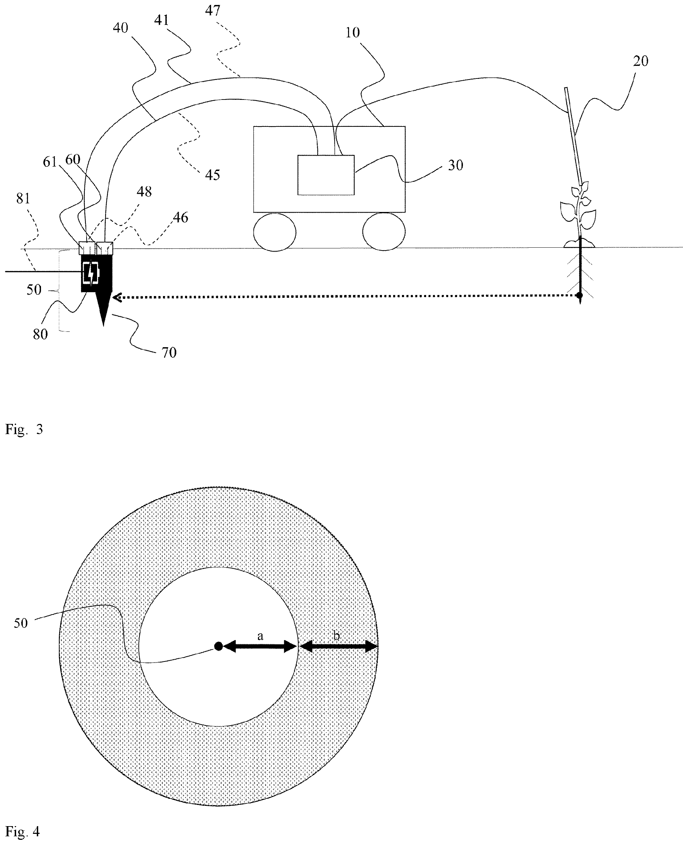

Fig. 3 shows an example of a weed control apparatus 10 which comprises a second connection unit 41. The at least one power supply unit 30 is electrically connected to the second connection unit 41. The second connection unit 41 is configured to be electrically connectable, preferably with a second cable 47 comprising a plug 48, to a second socket 61 of a weed control pole 50. The weed control pole 50 comprises a high voltage source 80 configured to provide electrical energy via the second connection unit 41 to the at least one power supply unit 30.

In an example, the high voltage source 80 is connected to a high voltage current network indicated with the number 81 in Fig. 3.

In an example, in the set up as shown in Fig. 3, the power supply unit 30 does comprise a transformer unit. The term transformer unit refers to a device that changes the value of alternating voltage or direct current by using electromagnetic induction.

In an example, the second cable 47 comprising a plug 48 is permanently connected to the weed control apparatus 10.

In an example, the second cable 47 comprising a plug 48 can be connected (e.g. with another plug-socket system) to the second electrical connection unit 41 of the weed control apparatus 10.

In an example, the first cable 45 and the second cable 47 are configured to be combined in one cable (but electrically isolated from each other).

In an example, the first plug 46 and the second plug 48 are configured to be combined in one plug (but electrically isolated from each other).

Fig. 4 shows an example of a weed control apparatus 10 wherein the at least one electrode 20 is configured to contact a weed within an area of between 1 to 50 meters, preferably 10 to 20 meters (indicated in Fig. 4 with distance arrow "b") from the weed control pole 50 and all around the weed control pole 50. The distance arrow "a" in Fig. 4 indicates that the distance of the working zone of the weed control apparatus to the indicated weed control pole 50 is preferably at least 10 meters.

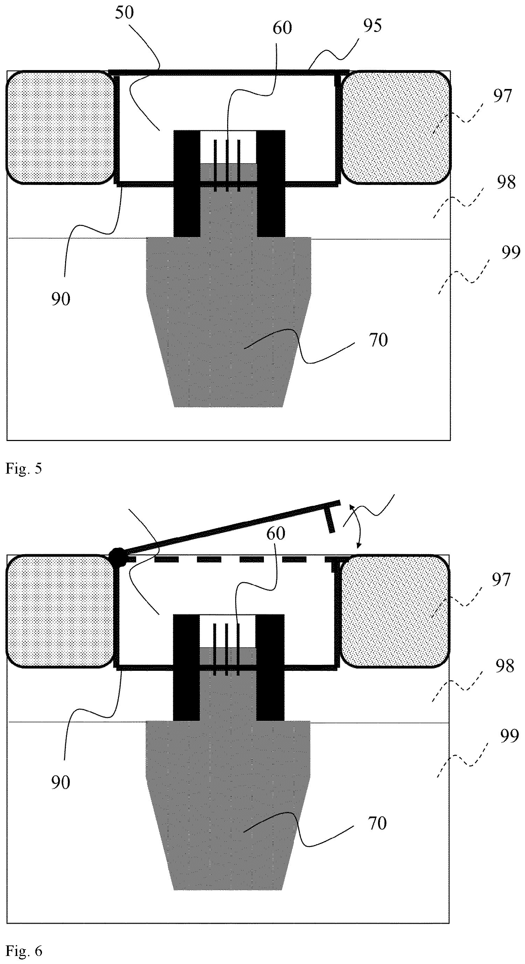

Fig. 5 shows an example of a weed control pole 50. The weed control pole 50 comprises at least one electrode 70, and at least one socket 60. The weed control pole 50 is configured to be permanently mounted in the soil in proximity to a plurality of weeds. The at least one electrode 70 is configured to be in direct contact with the soil after permanent mounting of the weed control pole 50 in the soil. The at least one socket 60 is electronically connected to the at least one electrode 70. The at least one socket 60 is electronically connectable to at least one weed control apparatus 10. The weed control apparatus 10 comprises a at least one electrode 20, at least one power supply unit 30, and least one electrical connection unit 40 (as shown in Fig. 1 to 3). The at least one socket 60 is configured to be electrically connectable via the at least one electrical connection unit 40 to the at least one power supply unit 30. The at least one power supply unit 30 is configured to supply the at least one electrode 20 with electrical energy. The at least one electrode 20 is configured to contact a weed in proximity to the weed control pole 50.

Fig. 5 indicates also that the surface 97 of the soil can be e.g. concrete, cobblestone. Below this layer there is typically a layer of sand 98. The soil 99 is generally below the sand layer 98.

According to an example, the weed control pole 50 further comprises a box 90 with a lid 95 (see Fig. 5). The box 90 is configured to enclose the at least one socket 60 of the weed control pole 50. The lid 95 is configured to close the box and to protect the at least one socket 60. The lid 95 is configured to be displaceable from the box 90 to make the at least one socket 60 accessible for an electronic connection via the electronic connection unit 40 to the at least one power supply unit 30 of the weed control apparatus 10.

In an example, the box can be mounted in various layers 97 to 99. The example of Fig. 5 shows that the box 90 can also only be mounted in the top layer 97 only.

In an example, the term "box" refers to a three-dimensional structure. The box may have one or more side walls and a bottom surface, with the bottom surface connected to an edge of the side wall. The at least one socket 60 is preferably embedded at the bottom surface of the box. The horizontal cross-sectional shape of the box body may include, without limitation, circular, elliptical, square, rectangular, and polygonal.

In an example, the term "lid" refers to a covering of the box 90 to seal the inside of the box and in particular to protect the at least one socket 60 enclosed in the box from environmental impacts such as rain etc.

According to an example, the at least one electrode 70 is located underneath the at least one socket 60.

Fig. 6 shows an example of a weed control pole 50 with a box 90 that comprises a hinged lid 96.

In an example, the hinge refers to a component used in a hinged lid that opens or closes while rotating on a certain axis. The hinge is connected to the box and the lid.

In an example the box can further comprise a padlock or any other means to lock the lid to the box during non-use.

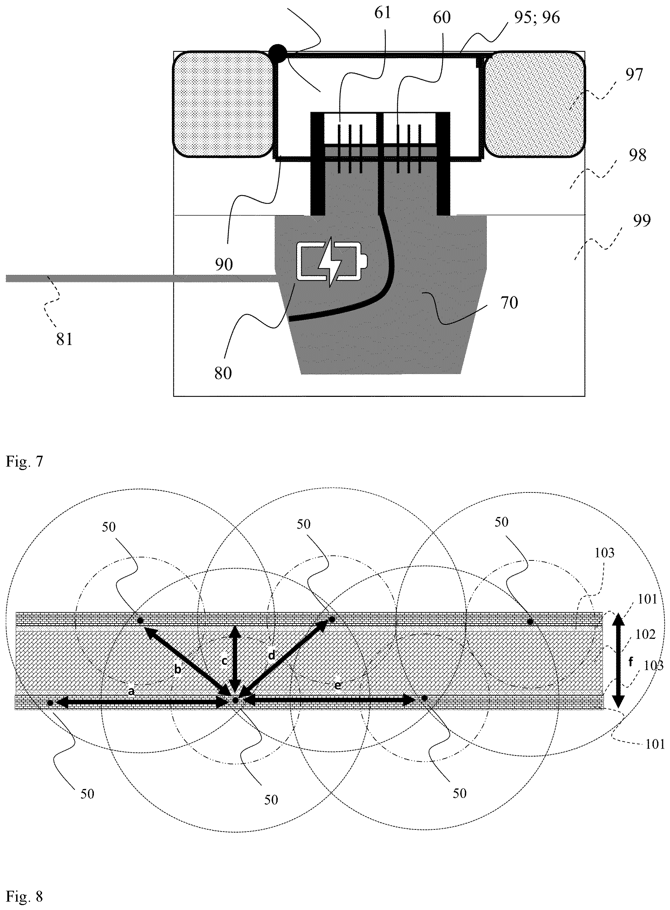

Fig. 7 shows an example of a weed control 50 further comprising: a second socket 61, and a high voltage source 80. The weed control apparatus 10 further comprises a second electrical connection unit 41 (as shown in Fig. 3). The second socket 61 is configured to be electrically connectable via the second electrical connection unit 41 to the at least one power supply unit 30 of the weed control apparatus 10. The high voltage source 80 is configured to provide electrical energy via the second electrical connection unit 41 to the at least one power supply unit 30 of the weed control apparatus 10. In an example, the high voltage source 80 is connected to a high voltage current network indicated with the number 81 in Fig. 7.

The high voltage source 80 and the second socket 61 are electronically isolated from the electrode 70 and the socket 60 as shown in Fig. 7 with the black line between these components of the weed control pole.

According to an example, another embodiment of the invention relates to a weed control system 100. The weed control system 100 comprises: at least one weed control apparatus 10 according to the first embodiment of the invention, and at least one weed control pole 50 according to the second embodiment of the invention. The at least one electrical connection unit 40 of the at least one weed control apparatus is configured to be connectable to the at least one socket 60 of the at least one weed control pole 50.

Fig. 8 shows an example of a weed control system 100. The weed control system 100 comprises: a plurality of weed control poles 50. The plurality of weed control poles 50 are arranged along a street, preferably with a distance to each other of at least 10 meters.

According to an example, the plurality of weed control poles 50 are placed alternately on each side of the street in a staggered arrangement; preferably with a distance to each other of at least 10 meters (the distances "a", "b", "d" and "e" in Fig. 6 are each at least 10 meters).

In an example, the distance between a first weed control pole 50 to the next adjacent weed control pole on the same side of the street is between is between 17 to 18 meters (distance "a" and "e" in Fig. 8 are each between 17 to 18 meters). The distance of the first weed control pole to the next adjacent weed control pole on the other side of the street is between 19.5 and 20.5 meters (distance "b" and "d" in Fig. 8 are each between 19.5 to 20.5 meters). In an example, the distance "c" in Fig. 8 is in between 9.5 and 10.5 meters and indicates the distance between two weed control poles if they would be mounted opposite to each other on each side of the street.

In an example, the distance "f" in Fig. 8 indicates the width of the street which is in between 14.5 and 15.5 meters.

In an example, the number 101 in Fig. 8 indicates the pavement of the street.

In an example, the number 102 in Fig. 8 indicates the car driving zone of the street.

In an example, the number 103 in Fig. 8 indicates the gutter of the street.

In an example, the circles around the weed control poles 50 in Fig. 8 indicate the working zones of the weed control apparatus 10 similarly as outlined in Fig. 4.

According to an example, another embodiment of the invention relates to a weed control method 200. The weed control method 200 with at least one weed control apparatus and at least one weed control pole, comprises:
a) providing (210) at least one weed control apparatus with at least one electrode , at least one power supply unit, and at least one electrical connection unit; wherein the at least one power supply unit is configured to supply the at least one electrode with electrical energy; and wherein, the at least one electrical connection unit is electronically connected to the at least one power supply unit;
b) providing (220) at least one weed control pole with at least one electrode, and at least one socket; wherein, the at least one electrode is configured to be in direct contact with the soil; and wherein, the at least one socket is electronically connected to the at least one electrode;
c) connecting (230) the at least one electrical connection unit of the weed control apparatus to the socket of the at least one weed control pole, preferably with at least one cable;
e) contacting (240) a weed in proximity to the at least one weed control pole with the at least one electrode of the weed control apparatus to apply high voltage to the weed.

According to an example, the weed control method 200 comprises - prior to step a):
a0) permanently mounting (205) the at least one weed control pole in the soil in proximity to the weed to be contacted with the at least one electrode of the at least one weed control apparatus.

According to an example, the weed control method 200 comprises - in step a0):
a0) permanently mounting (205) a plurality of weed control poles along a street.

In an example, the plurality of weed control poles are arranged along a street with a distance to each other of at least 10 meters.

In an example, the plurality of weed control poles are placed alternately on each side of the street in a staggered arrangement; preferably with a distance to each other of at least 10 meters.

In an example, the distance between a first weed control pole to the next adjacent weed control pole on the same side of the street is between is between 17 to 18 meters.

In an example, the distance of the first weed control pole to the next adjacent weed control pole on the other side of the street is between 19.5 and 20.5 meters.

In an example, in step a); (210) providing at least one weed control apparatus further comprising a second connection unit, wherein; the at least one power supply unit is electrically connected to the second connection unit;
in step b); (220) providing at least one weed control pole further comprising: a second socket and a high voltage source; wherein, the second socket is configured to be electrically connectable via the second electrical connection unit of the at least one weed control apparatus to the at least one power supply unit of the weed control apparatus; wherein, the high voltage source is configured to provide electrical energy via the second electrical connection unit of the at least one weed control apparatus to the at least one power supply unit of the weed control apparatus;
in step c); (230) connecting the second electrical connection unit of the weed control apparatus to the second socket of the at least one weed control pole, preferably with at least one cable.

In an example, in step e); (240) contacting a weed in proximity to the at least one weed control pole with the at least one electrode of the at least one weed control apparatus within an area of between 10 to 20 meters from the at least one weed control pole and all around the at least one weed control pole.

In an example, in step e) (230) contacting a weed in proximity to the at least one weed control pole with the at least one electrode of the at least one weed control apparatus, wherein the high voltage is configured to be applied on the at least one electrode of the at least one weed control apparatus only when the to at least one electrode is in contact with the at least one weed.

This ensures that no electrical current can flow during non-use of the weed control apparatus and reduces the risk of unattended accidents.

It has to be noted that embodiments of the invention are described with reference to different subject matters. In particular, some embodiments are described with reference to apparatus/device type claims whereas other embodiments are described with reference to system and/or method type claims. However, a person skilled in the art will gather from the above and the following description that, unless otherwise notified, in addition to any combination of features belonging to one type of subject matter also any combination between features relating to different subject matters is considered to be disclosed with this application.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

## Claims

1. A weed control apparatus (10), comprising:
- at least one electrode (20);
- at least one power supply unit (30);
- at least one electrical connection unit (40);
wherein, the at least one electrode (20) is configured to contact a weed;
wherein, the at least one power supply unit (30) is configured to supply the at least one electrode (20) with electrical energy;
wherein, the at least one electrical connection unit (40) is electronically connected to the at least one power supply unit (30);
wherein, the at least one electrical connection unit (40) is configured to be connectable, preferably via at least one cable (45) comprising a plug (46), to a socket (60) of a weed control pole (50);
wherein, the weed control pole (50) is permanently mounted in the soil in proximity to the weed to be contacted with the at least one electrode (20) of the weed control apparatus (10); and
wherein, the weed control pole (50) comprises an electrode (70).

2. A weed control apparatus (10) according to claim 1 comprises a second connection unit (41);
wherein, the at least one power supply unit (30) is electrically connected to the second connection unit (41);
wherein, the second connection unit (41) is configured to be electrically connectable, preferably with a second cable (47) comprising a plug (48), to a second socket (61) of a weed control pole (50); and
wherein the weed control pole (50) comprises a high voltage source (80) configured to provide electrical energy via the second connection unit (41) to the at least one power supply unit (30).

3. A weed control apparatus (10) according to any one of the claims 1 to 2,
wherein the at least one electrode (20) is configured to contact a weed within an area of between 1 to 50 meters from the weed control pole (50) and all around the weed control pole (50).

4. The weed control apparatus (10) according to any one of the previous claims, comprising:
- a distance sensor (21);
- a processing unit (22); and
- an output unit (23)
wherein the distance sensor (21) is configured to provide the processing unit (22) with the distance between the at least one electrode (20) and the weed control pole (50);
wherein, the processing unit (22) is configured to determine the voltage required to control a weed to be contacted with the at least one electrode (20) wherein the determination of the voltage comprises utilization of the measured distance between the at least one electrode (20) and the weed control pole (50);
wherein the output unit (23) is configured to output information useable to apply the required voltage to the at least one electrode (20).

5. A weed control pole (50), comprising:
- at least one electrode (70);
- at least one socket (60);
wherein, the weed control pole (50) is configured to be permanently mounted in the soil in proximity to a plurality of weeds;
wherein, the at least one electrode (70) is configured to be in direct contact with the soil after permanent mounting of the weed control pole (50) in the soil;
wherein, the at least one socket (60) is electronically connected to the at least one electrode (70);
wherein, the at least one socket (60) is electronically connectable to at least one weed control apparatus (10);
wherein, the weed control apparatus (10) comprises a at least one electrode (20), at least one power supply unit (30), and least one electrical connection unit (40);
wherein, the at least one socket (60) is configured to be electrically connectable via the at least one electrical connection unit (40) to the at least one power supply unit (30);
wherein, the at least one power supply unit (30) is configured to supply the at least one electrode (20) with electrical energy; and
wherein, the at least one electrode (20) is configured to contact a weed in proximity to the weed control pole (50).

6. A weed control pole (50) according to claim 5, further comprising:
- a box (90) with a lid (95);
wherein, the box (90) is configured to enclose the at least one socket (60) of the weed control pole (50);
wherein, the lid (95) is configured to close the box and to protect the at least one socket (60);
wherein, the lid (95) is configured to be displaceable from the box (90) to make the at least one socket (60) accessible for an electronic connection via the electronic connection unit (40) to the at least one power supply unit (30) of the weed control apparatus (10).

7. A weed control pole (50) according to any one of the claims 5 to 6, wherein, the at least one electrode (70) is located underneath the at least one socket (60).

8. A weed control pole (50) according to any one of the claims 5 to 7, wherein, the box (90) comprises a hinged lid (96).

9. A weed control pole (50) according to any one of the claims 5 to 8, further comprising:
- a second socket (61);
- a high voltage source (80);
wherein, the weed control apparatus (10) further comprises a second electrical connection unit (41);
wherein, the second socket (61) is configured to be electrically connectable via the second electrical connection unit (41) to the at least one power supply unit (30) of the weed control apparatus (10);
wherein, the high voltage source (80) is configured to provide electrical energy via the second electrical connection unit (41) to the at least one power supply unit (30) of the weed control apparatus (10).

10. A weed control system (100) comprising:
- at least one weed control apparatus (10) according to any one of the claims 1 to 4;
- at least one weed control pole (50) according to any one of the claims 5 to 9;
wherein, the at least one electrical connection unit (40) of the at least one weed control apparatus is configured to be connectable to the at least one socket (60) of the at least one weed control pole (50).

11. A weed control system (100) according to claim 10 comprising:
- a plurality of weed control poles (50);
wherein, the plurality of weed control poles (50) are arranged along a street, preferably with a distance to each other of at least 10 meters.

12. A weed control system (100) according to claim 11, wherein, the plurality of weed control poles (50) are placed alternately on each side of the street in a staggered arrangement; preferably with a distance to each other of at least 10 meters.

13. A weed control method (200) with at least one weed control apparatus and at least one weed control pole, comprising:
a) providing (210) at least one weed control apparatus with at least one electrode , at least one power supply unit, and at least one electrical connection unit; wherein the at least one power supply unit is configured to supply the at least one electrode with electrical energy; and
wherein, the at least one electrical connection unit is electronically connected to the at least one power supply unit;
b) providing (220) at least one weed control pole with at least one electrode, and at least one socket;
wherein, the at least one electrode is configured to be in direct contact with the soil; and
wherein, the at least one socket is electronically connected to the at least one electrode;
c) connecting (230) the at least one electrical connection unit of the weed control apparatus to the socket of the at least one weed control pole, preferably with at least one cable;
e) contacting (240) a weed in proximity to the at least one weed control pole with the at least one electrode of the weed control apparatus to apply high voltage to the weed.

14. A weed control method (200) according to claim 13, wherein, the method comprises - prior to step a):
a0) permanently mounting (205) the at least one weed control pole in the soil in proximity to the weed to be contacted with the at least one electrode of the at least one weed control apparatus.

15. A weed control method (200) according to claim 14, wherein, the method comprises - in step a0):
a0) permanently mounting (205) a plurality of weed control poles along a street.
